# EUROPÄISCHE PATENTANMELDUNG

(11) **EP 2 098 791 A1**
(43) Veröffentlichungstag der Anmeldung: **09.09.2009**
(21) Anmeldenummer: 08004093.4
(22) Anmeldetag: 05.03.2008
(51) Int. Cl.: F24D 11/02

(54) **Vorrichtung zur Erwärmung von Wasser**

(71) Anmelder: Roth Werke GmbH, 35232 Dautphetal (DE)
(72) Erfinder: Roth, Manfred, 35232 Dautphetal (DE); Hoellenriegel, Wolfgang, 35216 Biedenkopf (DE)
(74) Vertreter: Rohmann, Michael

(57) **Zusammenfassung**

Vorrichtung zur Erwärmung von Wasser, insbesondere zur Warmwasserbereitung, wobei die Vorrichtung zumindest eine Sonnenenergienutzungseinheit, zumindest eine Erdwärmenutzungseinheit und zumindest eine Wärmepumpe aufweist. Die Erdwärmenutzungseinheit ist in einer Tiefe von 0,5 m bis 5 m im Erdreich angeordnet. Das Wasser ist von der Sonnenenergienutzungseinheit und/oder von der Wärmepumpe erwärmbar, welche Wärmepumpe quellseitig mit der Sonnenenergienutzungseinheit und/oder Erdwärmenutzungseinheit verbunden ist. Von der Sonnenenergienutzungseinheit gewonnene Wärme ist in die Erdwärmenutzungseinheit mit der Maßgabe förderbar, dass die in das Erdreich geförderte Wärme, die aus dem Erdreich durch die Wärmepumpe entnommene Wärme zumindest teilweise ersetzt bzw, regeneriert.

## Beschreibung

Die Erfindung betrifft eine Vorrichtung zur Erwärmung eines fluiden Mediums, insbesondere zur Warmwasserbereitung. - Fluides Medium meint im Rahmen der Erfindung insbesondere Wasser oder eine wässrige Lösung oder eine wässrige Mischung.

Vorrichtungen der vorstehend genannten Art sind aus der Praxis grundsätzlich bekannt. Die bekannten Vorrichtungen zeichnen sich häufig durch einen unzureichenden Wirkungsgrad aus. Viele bekannte Vorrichtungen sind auch in umwelttechnischer Hinsicht zu beanstanden. Fernerhin ist die Montage der bekannten Vorrichtungen oft aufwendig und kostspielig.

Demgegenüber liegt der Erfindung das technische Problem zugrunde, eine Vorrichtung anzugeben, mit der eine umweltschonende Warmwasserbereitung möglich ist, die langfristig mit einem hohen Wirkungsgrad betreibbar ist und mit der die vorstehend beschriebenen Nachteile überwunden werden.

Zur Lösung des technischen Problems lehrt die Erfindung eine Vorrichtung zur Erwärmung eines fluiden Mediums, insbesondere zur Warmwasserbereitung, wobei die Vorrichtung zumindest eine Sonnenenergienutzungseinheit, zumindest eine Erdwärmenutzungseinheit und zumindest eine Wärmepumpe aufweist, wobei die Erdwärmenutzungseinheit in einer Tiefe von 0,5 m bis 5 m im Erdreich angeordnet ist, wobei das Wasser von der Sonnenenergienutzungseinheit und/oder von der Wärmepumpe erwärmbar ist, welche Wärmepumpe quellseitig mit der Sonnenenergienutzungseinheit und/oder mit der Erdwärmenutzungseinheit verbunden ist und wobei von der Sonnenenergienutzungseinheit gewonnene Wärme in die Erdwärmenutzungseinheit mit der Maßgabe einbringbar bzw, förderbar ist, dass die in die Erdwärmenutzungseinheit geförderte Wärme die aus der Erdwärmenutzungseinheit durch die Wärmepumpe entnommene Wärme zumindest teilweise ersetzt bzw. regeneriert. Es liegt im Rahmen der Erfindung, dass als fluides Medium Wasser oder Sole (Gemisch Wasser-Frostschutzmittel) eingesetzt wird. Soweit nachfolgend der Begriff "Wasser" verwendet wird, ist damit aber auch ganz allgemein ein fluides Medium gemeint. Soweit vorstehend und nachfolgend von der Anordnung der Erdwärmenutzungseinheit in einer Tiefe die Rede ist, meint Tiefe den Abstand der Oberseite bzw. Oberkante der Erdwärmenutzungseinheit, vorzugsweise den Abstand der Oberseite bzw. Oberkante der nachfolgend noch beschriebenen Registerstation/Registerstationen von der Erdoberfläche.

Es hat sich bewährt, dass die Sonnenenergienutzungseinheit zumindest einen Sonnenkollektor und bevorzugt mehrere bzw. eine Vielzahl von Sonnenkollektoren aufweist, in welchen Sonnenkollektoren vorzugsweise ein Wärmeträgermedium, beispielsweise Wasser oder ein Gemisch Wasser-Frostschutzmittel, durch die Sonneneinstrahlung erwärmt wird. Vorzugsweise weist die Sonnenenergienutzungseinheit ein hermetisch dichtes bzw. fluiddichtes Gehäuse auf. Zweckmäßigerweise wird das in der Sonnenenergienutzungseinheit erwärmte Wärmeträgermedium einem Wärmetauscher zugeführt, in dem die Wärme des Wärmeträgermediums auf das Wasser übertragen wird. Es empfiehlt sich, dass der Wärmetauscher in einem Vorratsbehältnis angeordnet ist und/oder Bestandteil einer Heizungsanlage ist. Vorzugsweise wird die in der Sonnenenergienutzungseinheit gewonnene Wärme zur Warmwasserbereitung und/oder zur Unterstützung einer Gebäudeheizung eingesetzt.

Es liegt im Rahmen der Erfindung, dass die Erdwärmenutzungseinheit als Registerstation ausgebildet ist, die einen Behälter, die Verteilungseinheit und die Registereinheit aufweist.

Es liegt im Rahmen der Erfindung, dass die Erdwärmenutzungseinheit in einer frostfreien Tiefe im Erdreich angeordnet ist. Es empfiehlt sich, dass die Erdwärmenutzungseinheit zumindest 0,6 m, vorzugsweise zumindest 0,8 m und bevorzugt zumindest 1,0 m von der Erdoberfläche beabstandet in dem Erdreich angeordnet ist. Gemäß einer bevorzugten Ausführungsform der Erfindung ist die Erdwärmenutzungseinheit in einer Tiefe zwischen 0,5 m und 4,0 m, empfohlenermaßen zwischen 0,5 m bis 3,5 m, zweckmäßigerweise zwischen 0,6 bis 3,0 m, vorzugsweise zwischen 0,7 m bis 2,5 m und bevorzugt zwischen 0,8 m bis 2,0 m im Erdreich angeordnet. Es liegt im Rahmen der Erfindung, dass in der Erdwärmenutzungseinheit das Wärmeträgermedium auf die Temperatur des Erdreichs erwärmt bzw. temperiert wird. Es liegt fernerhin im Rahmen der Erfindung, dass das Wärmeträgermedium von der Erdwärmenutzungseinheit zu der Wärmepumpe förderbar ist.

Es ist möglich, dass bei intensiver bzw. ausreichender Sonneinstrahlung die Erwärmung des Wassers allein durch die in der Sonnenenergienutzungseinheit gewonnene und auf das Wärmeträgermedium übertragene Wärme erfolgt. In diesem Fall ist der Betrieb der Wärmepumpe nicht erforderlich. Es liegt im Rahmen der Erfindung, dass eine Verbindung zwischen der Sonnenenergienutzungseinheit und der Wärmepumpe herstellbar ist. Empfohlenermaßen ist die Sonnenenergienutzungseinheit direkt mit der Wärmepumpe verbunden, wenn die durch die Sonnenenergienutzungseinheit auf das Wärmeträgermedium übertragbare Wärme nicht ausreichend ist, um das Wasser auf eine vorgegebene Temperatur zu erwärmen. Gemäß einer Ausführungsform der Erfindung wird das Wärmeträgermedium von der Sonnenenergienutzungseinheit zur Wärmepumpe geleitet, solange die Temperatur des von der Sonnenenergienutzungseinheit zur Wärmepumpe geleiteten Wärmeträgermediums höher oder gleich der Temperatur des Wärmeträgermediums ist, das von der Erdwärmenutzungseinheit zur Wärmepumpe förderbar ist. Es empfiehlt sich, dass das Wärmeträgermedium von der Erdwärmenutzungseinheit zu der Wärmepumpe gefördert wird, wenn die Temperatur des durch die Sonnenenergienutzungseinheit geförderten Wärmeträgermediums kleiner ist als die Temperatur des durch die Erdwärmenutzungseinheit strömenden Wärmeträgermediums ist. Es liegt im Rahmen der Erfindung, dass in diesem Fall das Erdreich abgekühlt wird. Erfindungsgemäß ist das Wärmeträgermedium von der Sonnenergienutzungseinheit in die Erdwärmenutzungseinheit förderbar, so dass die Temperaturerniedrigung des Erdreichs infolge des Abtransportes der Wärme durch das Wärmeträgermedium zumindest teilweise kompensiert und vorzugsweise vollständig ausgeglichen wird.

Es liegt im Rahmen der Erfindung, dass der Behälter der Registerstation als Speicher für das in der Sonnenenergienutzungseinheit bzw. solarerwärmte Wärmeträgermedium, vorzugsweise Wasser, dient. In diesem Falle wird dersolare Ertrag der Sonnenenergienutzungseinheit zur Temperaturerhöhung des Wärmeträgemediums bzw. eines Speichermediums genutzt.

Es empfiehlt sich, dass ein erfindungsgemäßes System, das die Sonnenenergienutzungseinheit, die Erdwärmenutzungseinheit, die Wärmepumpe und den Wärmetauscher aufweist, als geschlossenes System ausgebildet ist. Das Wärmeträgermedium zirkuliert dann in diesem geschlossenen System.

Es liegt im Rahmen der Erfindung, dass die Erdwärmenutzungseinheit zumindest eine Registerstation aufweist, welche Registerstation zumindest eine Registereinheit und vorzugsweise eine Mehrzahl bzw. eine Vielzahl von Registereinheiten enthält. Zweckmäßigerweise wird sowohl die Registerstation als auch die Registereinheit von dem Wärmeträgermedium durchströmt.

Gemäß einer Ausführungsform der Erfindung ist eine Mehrzahl bzw. eine Vielzahl von Registereinheiten sternförmig um die Registerstation angeordnet. Dann ist empfohlenermaßen die mittig angeordnete Registerstation mit Registereinheiten bzw. Registerarmen ausgestattet. Es ist aber auch möglich, dass die Registereinheiten in einer anderen geometrischen Form angeordnet und an die zentrale Registerstation angeschlossen sind,

Vorzugsweise ist die Registerstation zumindest größtenteils aus Kunststoff gefertigt. Es liegt im Rahmen der Erfindung, dass die Registerstation vollständig bzw. im Wesentlichen vollständig aus Kunststoff gefertigt ist. Gemäß bevorzugter Ausführungsform ist die Registerstation als fluiddichtes Kunststoffbehältnis ausgestaltet.

Es empfiehlt sich, dass die Registerstation zumindest eine Verteilungseinheit aufweist, welche Verteilungseinheit mit der Maßgabe steuerbar ist, dass das Wärmeträgermedium zumindest einer Registereinheit zuleitbar ist. Es liegt im Rahmen der Erfindung, dass die Verteilungseinheit zumindest einen Zulauf und zumindest einen Ablauf für das Wärmeträgermedium aufweist. Empfohlenermaßen wird die Verteilungseinheit so gesteuert, dass das Wärmeträgermedium vorzugsweise zwei und bevorzugt einer Mehrzahl bzw. Vielzahl von Registereinheiten zugeleitet wird.

Zweckmäßigerweise ist in einem Regenerationsmodus der Zulauf der Verteilungseinheit mit einem Ausgang der Sonnenenergienutzungseinheit verbunden. Auf diese Weise wird das in der Sonnenenergienutzungseinheit erwärmte Wärmeträgermedium der Verteilungseinheit in der Registerstation zugeführt. Empfohlenermaßen wird durch die Verteilungseinheit eine Verbindung zwischen dem Zulauf der Verteilungseinheit und zumindest einer Registereinheit hergestellt, so dass das erwärmte Wärmeträgermedium in zumindest eine Registereinheit strömt. Es liegt dabei im Rahmen der Erfindung, dass das erwärmte Wärmeträgermedium in der Registereinheit die in der Sonnenenergienutzungseinheit aufgenommene Wärme an das die Registereinheit umgebende Erdreich abgibt. Im Ergebnis wird die Temperatur des die Registereinheit umgebenden Erdreichs erhöht. Das durch das Erdreich abgekühlte Wärmeträgermedium strömt durch die Registereinheit zurück zur Verteilungseinheit, wobei zweckmäßigerweise der Ablauf der Verteilungseinheit mit einem Eingang der Sonnenenergienutzungseinheit verbunden ist.

Gemäß einer Ausführungsform der Erfindung wird in einem Produktionsmodus die in dem Wärmeträgermedium gespeicherte Wärme auf das zu erwärmende Wasser übertragen. Zweckmäßigerweise ist in dem Produktionsmodus die Sonnenenergienutzungseinheit und/oder der Zulauf der Verteilungseinheit mit der Zuleitung der Wärmepumpe bzw, quellenseitig mit der Wärmepumpe verbunden. Das Wärmeträgermedium, das die Temperatur bzw. ungefähr die Temperatur des Erdreichs aufweist, ist dann durch den Zulauf der Verteilungseinheit zur Zuleitung der Wärmepumpe förderbar. Das durch die Wärmegewinnung in der Wärmepumpe abgekühlte Wärmeträgermedium strömt durch den Abfluss der Wärmepumpe zu dem Ablauf der Verteilungseinheit, welche Verteilungseinheit das abgekühlte Wärmeträgermedium zumindest einer Registereinheit und bevorzugt einer Mehrzahl von Registereinheiten zuleitet. Das abgekühlte Wärmeträgermedium nimmt in den Registereinheiten zweckmäßigerweise die in dem Erdreich gespeicherte Wärme auf und kann dann erneut der Wärmepumpe zugeführt werden. Es liegt im Rahmen der Erfindung, dass die in dem Regenerationsmodus in das Erdreich eingebrachte Wärmemenge die in dem Produktionsmodus entnommene Wärmemenge zumindest teilweise und vorzugsweise vollständig ersetzt bzw. regeneriert. Es ist möglich, dass in dem Regenerationsmodus mehr Wärmeenergie in das Erdreich transportiert wird, als im Produktionsmodus aus dem Erdreich entnommen wird.

Zweckmäßigerweise ist eine Registereinheit in einer Ebene bzw. im Wesentlichen in einer Ebene angeordnet, Gemäß einer Ausführungsform ist die Ebene horizontal bzw. im Wesentlichen horizontal orientiert. Es ist auch möglich, dass die Ebene vertikal bzw. im Wesentlichen vertikal orientiert ist. Wenn an die Registerstation eine Mehrzahl bzw. eine Vielzahl von Registereinheiten angeschlossen ist, ist es möglich, dass ein Teil der Registereinheiten in einer horizontalen bzw. im Wesentlichen horizontalen Ebene und ein anderer Teil der Registereinheiten in einer vertikalen bzw. im Wesentlichen vertikalen Ebene angeordnet ist.

In einer bevorzugten Ausführungsform weist die Registerstation zumindest eine Registereinheit auf, die im Wesentlichen in horizontalen Ebenen angeordnet ist und wobei die Registereinheit durch Umlenkung so vertikal übereinander angeordnet ist, dass die Umlenkungen zumindest einer Registereinheit parallel bzw. mindestens im Wesentlichen parallel zueinander orientiert sind. Zweckmäßigerweise sind die Umlenkungen zumindest einer Registereinheit mit der Maßgabe angeordnet, dass zwischen ihnen ein Spalt ausgebildet wird. Gemäß einer Ausführungsform ist der Spalt mit einem Füllmaterial, beispielsweise mit Erdreich oder Sand, verfüllt. Es ist möglich, die ebenenweise angeordneten Registereinheiten vertikal und parallel bzw. im Wesentlichen parallel zueinander auszurichten, sowie einen Spalt zwischen den einzelnen Einheiten auszubilden. Empfohlenermaßen wird der zwischen den benachbarten Registereinheiten angeordnete Spalt mit dem Füllmaterial verfüllt,

Zweckmäßigerweise weist eine Registereinheit zumindest einen Wärmeaustauschkreislauf auf, wobei der Wärmeaustauschkreislauf von zumindest einem Rohr gebildet wird. Es empfiehlt sich, dass eine Registereinheit zwei und vorzugsweise mehrere bzw. eine Vielzahl von Wärmeaustauschkreisläufen aufweist. Gemäß einer Ausführungsform der Erfindung ist das den Wärmeaustauschkreislauf bildende Rohr aus Kunststoff gefertigt. Empfohlenermaßen ist der zumindest eine Wärmeaustauschkreislauf bzw. die Mehrzahl bzw. Vielzahl der Wärmeaustauschkreisläufe in einer Ebene angeordnet.

Vorzugsweise wird das Rohr im Erdreich von zumindest einem Halteelement gehalten, Gemäß einer Ausführungsform ist das Halteelement als Ständerrohr bzw. Pfosten ausgestaltet, wobei in das Ständerrohr bzw. in den Pfosten zumindest eine Aufnahme für das Rohr eingebracht ist. Zweckmäßigerweise weist das Ständerrohr bzw. der Pfosten zumindest eine Einkerbung bzw. Nut auf, in der das Rohr auf dem Halteelement gehalten wird. Nach einer Ausführungsvariante werden die Rohre eines Wärmeaustauschkreislaufs und/oder mehrerer Wärmeaustauschkreisläufe voneinander beabstandet in zumindest einem Ständerrohr gehalten. Es empfiehlt sich, dass der Abstand zwischen den Rohren dabei konstant bzw. im Wesentlichen konstant ist.

Gemäß einer Ausführungsform der Erfindung ist das Rohr durch zumindest ein Fixierungselement an dem Halteelement fixiert. Vorzugsweise wird als Fixierungselement eine Fixierungshülse eingesetzt. Die Anbringung des Fixierungselements am Halteelement erfolgt mit der Maßgabe, dass das Rohr unverlierbar in der Aufnahme bzw. Einkerbung des Halteelements gehalten wird.

Gegenstand der Erfindung ist auch eine Vorrichtung zur Erwärmung eines fluiden Mediums, vorzugsweise von Wasser, insbesondere zur Warmwasserbereitung, wobei die Vorrichtung zumindest eine Erdwärmenutzungseinheit und zumindest eine Wärmepumpe aufweist, wobei die Erdwärmenutzungseinheit in einer Tiefe von 0,5 m bis 5 m im Erdreich angeordnet ist, wobei das Wasser von der Wärmepumpe erwärmbar ist, welche Wärmepumpe quellseitig mit der Erdwärmenutzungseinheit verbunden ist und wobei aus der Erdwärmenutzungseinheit Wärme zu der Wärmepumpe förderbar ist. Bevorzugte Ausführungsformen dieser erfindungsgemäßen Vorrichtung ergeben sich ebenfalls aus den Patentansprüchen 2 bis 11. Im Übrigen gelten die vorstehend zu der Erdwärmenutzungseinheit bzw. zu dem Aggregat aus Erdwärmenutzungseinheit und Wärmepumpe beschriebenen bevorzugten Ausführungsformen auch für diese erfindungsgemäße Vorrichtung.

Der Erfindung liegt die Erkenntnis zugrunde, dass mit der erfindungsgemäßen Vorrichtung auf sehr effektive Weise bzw. mit einem überraschend geringen Energiebedarf Wasser erwärmt werden kann. Wesentlich an der Erfindung ist, dass die erfindungsgemäße Vorrichtung eine funktionssichere und optimale Nutzung von Sonnenenergie und der im Erdreich gespeicherten Energie ermöglicht. Durch die zuverlässige Regeneration der Erdwärme bzw. Kompensation der aus dem Erdreich entnommenen Wärme erlaubt die erfindungsgemäße Erdwärmenutzungseinheit in Kombination mit der erfindungsgemäßen Sonnenenergienutzungseinheit eine Temperaturerhöhung des Wärmeträgermediums insbesondere in der Zuleitung zu der Wärmepumpe. Durch diese Temperaturerhöhung ist ein Betrieb der Wärmepumpe mit einem gegenüber dem Stand der Technik wesentlich erhöhten Wirkungsgrad möglich.

Weiterhin liegt der Erfindung die Erkenntnis zugrunde, dass die Bereitstellung einer erfindungsgemäßen Erdwärmenutzungseinheit nur relativ geringe Erdarbeiten erfordert. Die erfindungsgemäße Erdwärmenutzungseinheit benötigt nur einen verhältnismäßig geringen Platzbedarf. - Im Ergebnis lässt sich die Montage der erfindungsgemäßen Vorrichtung gegenüber den aus dem Stand der Technik bekannten Vorrichtungen kostengünstiger ausführen. Es hat sich auch gezeigt, dass durch die erfindungsgemäße feste Positionierung der Rohre bzw. Registereinheiten in den Halteelementen eine einfache, schnelle und sichere Montage der Registereinheiten möglich ist. Auch diese Ausgestaltung der Vorrichtung trägt zur Kostenreduktion bei der Montage bei.

Dadurch, dass die Sonnenenergienutzungseinrichtung nach besonders bevorzugter Ausführungsform mit einem fluiddichten Gehäuse ausgestattet ist, ist die Temperatur des in die Sonnenenergienutzungseinheit geführten Wärmeträgermediums unkritisch. Es ist nämlich möglich, die Temperatur des in die Sonnenenergienutzungseinheit fließenden Wärmeträgermediums unter die Temperatur der die Sonnenenergienutzungseinheit umgebenden Atmosphäre abzukühlen.

Auf diese Weise wird die nutzbare Wärmemenge, die in dem Wärmeträgermedium gespeichert ist, weiter erhöht. Die aus dem Stand der Technik bekannte Problematik, dass in der Sonnenenergienutzungseinheit kondensierendes Wasser zu einer Verminderung des Wirkungsgrades führt und Korrosionsprobleme verursacht, wird mit der Erfindung auf einfache Weise überwunden. Weiterhin bietet die Erdwärmenutzungseinheit die Möglichkeit, durch eine Umkehrung der Förderrichtung des Wärmeträgermediums die Vorrichtung zum Kühlen beispielsweise eines Gebäudes einzusetzen.

Nachfolgend wird die Erfindung anhand einer lediglich ein Ausführungsbeispiel darstellenden Zeichnung detailliert erläutert. Es zeigen in schematischer Darstellung:
- Fig.1: eine erste Ausführungsform der erfindungsgemäßen Vorrichtung zur Erwärmung von Wasser,
- Fig. 2: eine zweite Ausführungsform der erfindungsgemäßen Vorrichtung zur Erwärmung von Wasser,
- Fig. 3: eine Draufsicht auf eine erste Ausführungsform einer erfindungsgemäßen Erdwärmenutzungseinheit,
- Fig. 4: eine Seitenansicht einer erfindungsgemäßen Registereinheit,
- Fig. 5: eine Seitenansicht eines erfindungsgemäßen Ständerrohres und
- Fig. 6: eine Draufsicht auf eine zweite Ausführungsform einer erfindungsgemäßen Erdwärmenutzungseinheit.

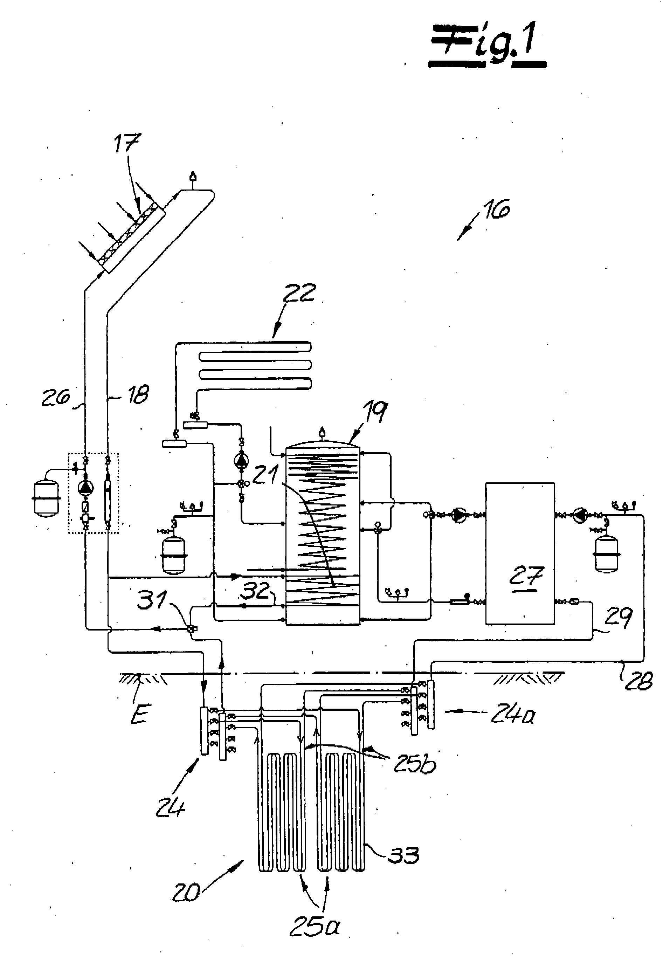

In Fig. 1 ist eine erste Ausführungsform einer erfindungsgemäßen Vorrichtung 16 zur Erwärmung von Wasser dargestellt. Ein Wärmeträgermedium, das in einer Sonnenenergienutzungseinheit bzw. in einem Sonnenkollektor 17 erwärmt wird, wird über eine Versorgungsleitung 18 zu einer Erdwärmenutzungseinheit 20 gefördert. In Fig. 1 ist dargestellt, dass das Wärmeträgermedium durch eine Verteilungseinheit 24 zwei Primärkreisläufen 25a zugeführt wird. Auf diese Weise wird die Wärme, die durch den Sonnenkollektor 17 auf das Wärmeträgermedium übertragen wurde, in die Erdwärmenutzungseinheit 20 gefördert und auf das Erdreich E übertragen. Das durch das Erdreich E abgekühlte Wärmeträgermedium wird durch die Verteilungseinheit 24 einer Rückführungsleitung 26 zugeleitet und strömt durch die Rückführungsleitung 26 zurück zum Sonnenkollektor 17. Weiterhin ist an die Versorgungsleitung 18 ein in einem Warmwasserkessel 19 angeordneter Wärmetauscher 21 angeschlossen, durch den die in dem Sonnenkollektor 17 auf das Wärmeträgermedium übertragene Wärme auf das zu erwärmende Wasser getauscht werden kann. Das durch diesen Wärmeaustauschprozess abgekühlte Wärmeträgermedium wird der Rückführungsleitung 26 zugeführt und wieder zurück zum Sonnenkollektor 17 gefördert.

Weiterhin sind in der Erdwärmenutzungseinheit 20 zwei Sekundärkreisläufe 25b angeordnet, die mit einer Verteilungseinheit 24a verbunden sind. Mittels eines weiteren Wärmeträgermediums wird die in das Erdreich E geförderte Wärme bzw. die in dem Erdreich E gespeicherte Wärme durch eine Zuleitung 28 zu einer Wärmepumpe 27 gefördert. In der Wärmepumpe 27 erfolgt eine Wärmeübertragung von dem weiteren Wärmeträgermedium auf das zu erwärmende Wasser, wobei das erwärmte Wasser in den Warmwasserkessel 19 gepumpt wird. Das durch den Wärmeaustauschprozess abgekühlte weitere Wärmeträgermedium wird mittels einer Abflussleitung 29 von der Wärmepumpe 27 zurück zu der weiteren Verteilungseinheit 24a gefördert und den Sekundärkreisläufen 25b zugeleitet.

Das in dem Warmwasserkessel 19 vorrätig gehaltene, erwärmte Wasser dient beispielsweise der Warmwasserversorgung oder zur Unterstützung eines Heizungsbetriebes.

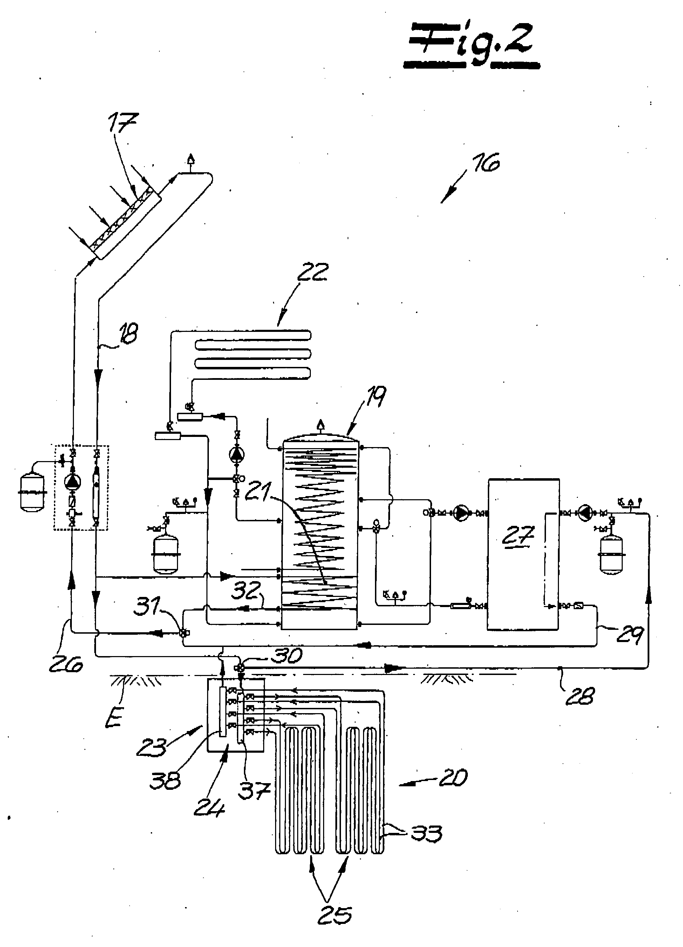

In Fig. 2 ist eine zweite Ausführungsform einer erfindungsgemäßen Vorrichtung 16 zur Erwärmung von Wasser, insbesondere zur Warmwasserbereitung und zur Unterstützung einer Gebäudeheizung dargestellt. Das in einer Sonnenenergienutzungseinheit bzw. einem Sonnenkollektor 17 erwärmte Wärmeträgermedium wird über eine Versorgungsleitung 18 vorzugsweise und in dem Ausführungsbeispiel nach Fig. 2 einem Warmwasserkessel 19 und/oder einer Erdwärmenutzungseinheit 20 zugeführt. Gemäß Fig. 2 wird die in dem Sonnenkollektor 17 auf das Wärmeträgermedium übertragene Wärme in einem in dem Warmwasserkessel 19 angeordneten Wärmetauscher 21 auf das zu erwärmende Wasser übertragen. Das erwärmte Wasser, das in dem Warmwasserkessel 19 vorrätig gehalten wird, dient beispielsweise zum Betrieb und/oder zur Unterstützung einer Heizungsanlage 22 und/oder einer nicht dargestellten Versorgungseinrichtung für erwärmtes Brauchwasser. Weiterhin ist das erwärmte Wärmeträgermedium nach Fig. 2 einer Erdwärmenutzungseinheit 20 über die Versorgungsleitung 18 zuleitbar. In einer Registerstation 23 ist in dem Ausführungsbeispiel nach Fig. 2 eine Verteilungseinheit 24 angeordnet, mit der das Wärmeträgermedium in dem Ausführungsbeispiel nach Fig. 2 auf zwei Registereinheiten mit vier Kreisläufen 25 verteilt wird. Das Wärmeträgermedium durchströmt nach Fig. 2 die Kreisläufe 25 und wird zu der in der Registerstation 23 angeordneten Verteilungseinheit 24 gefördert, von der aus das Wärmeträgermedium über die Rückführungsleitung 26 zurück zum Sonnenkollektor 17 fließt. Zweckmäßigerweise und in dem Ausführungsbeispiel gemäß Fig. 2 ist auch der in dem Warmwasserkessel 19 angeordnete Wärmetauscher 21 mit der Maßgabe an die Rückführungsleitung 26 angeschlossen, dass das in dem Wärmetauscher 21 abgekühlte Wärmeträgermedium der Rückführungsleitung 26 zuleitbar ist. Gemäß einer besonders bevorzugten Ausführungsform und im Ausführungsbeispiel gemäß Fig. 2 ist die Versorgungsleitung 18 ebenfalls mit einer Wärmepumpe 27 durch eine Zuleitung 28 verbunden. In der Wärmepumpe 27 wird die in dem Wärmeträgermedium gespeicherte Wärme auf das in dem Warmwasserkessel 19 zu erwärmende Wasser übertragen, wobei das Wärmeträgermedium abgekühlt wird und durch eine Abflussleitung 29 zu der Erdwärmenutzungseinheit 20 und/oder dem Sonnenkollektor 17 förderbar ist. Vorzugsweise und in dem Ausführungsbeispiel nach Fig. 2 ist die Abflussleitung 29 mit der Rückführungsleitung 26 verbunden. In Fig. 2 ist dargestellt, dass an einer Verbindungsstelle, an der die Versorgungsleitung 18 mit der Erdwärmenutzungseinheit 20 und/oder der Zuleitung 28 verbunden ist, ein Dreiwegeventil 30 angeordnet ist. Weiterhin ist ein Dreiwegeventil 31 an einer Verbindung angeordnet, an der die Abflussleitung 29 der Wärmepumpe 27 und eine Ausgangsleitung 32 des Wärmetauschers 21 zusammentreffen und zu der Rückführungsleitung 26 zusammengeschlossen werden.

In einem Produktionsmodus wird das durch den Sonnenkollektor 17 erwärmte Wärmeträgermedium dem in dem Warmwasserkessel 19 angeordneten Wärmetauscher 21 zugeführt, so dass das in dem Warmwasserkessel 19 befindliche Wasser erwärmt wird. Dies erfolgt zweckmäßigerweise und gemäß Fig. 2 solange, bis das Wasser in dem Warmwasserkessel 19 eine vorgegebene Solltemperatur erreicht hat.

Ist eine Erwärmung auf die vorgegebene Solltemperatur aufgrund beispielsweise nicht ausreichender Sonneneinstrahlung nicht möglich, wird das Wärmeträgermedium nach Durchströmen des Sonnenkollektors 17 über die Versorgungsleitung 18 und die Zuleitung 28 der Wärmepumpe 27 zugeführt. Die Versorgung der Wärmepumpe 27 mit dem durch den Sonnenkollektor 17 erwärmten Wärmeträgermedium erfolgt mit der Maßgabe, dass das den Sonnenkollektor 17 verlassene Wärmeträgermedium eine höhere Temperatur bzw. einen höheren Wärmegehalt aufweist als das in der Erdwärmenutzungseinheit 20 befindliche Wärmeträgermedium. Gemäß Fig. 2 wird das Wärmeträgermedium in der Wärmepumpe 27 abgekühlt und über die Abflussleitung 29 sowie die Rückführungsleitung 26 zurück zu dem Sonnenkollektor 17 gefördert. Im Ergebnis wird durch die Dreiwegeventile 30, 31 ein Kreislauf ausgebildet, in dem der Sonnenkollektor 17 mit der Wärmepumpe 27 verbunden ist. Empfohlenermaßen und im Ausführungsbeispiel nach Fig. 2 wird in der Wärmepumpe 27 die in dem Wärmeträgermedium gespeicherte Energie auf das in dem Warmwasserkessel 19 vorrätig gehaltene Wasser übertragen.

Vorzugsweise und in dem Ausführungsbeispiel nach Fig. 2 werden die Dreiwegeventile 30, 31 mit der Maßgabe eingestellt, dass ein Kreislauf, in dem die Erdwärmenutzungseinheit 20 mit der Wärmepumpe 27 verbunden ist, ausgebildet, wenn die Temperatur des durch den Sonnenkollektor 17 erwärmten Wärmeträgermediums niedriger ist als die Temperatur des durch die Erdwärmenutzungseinheit 20 zur Verfügung gestellten Wärmeträgermediums ist. Das Wärmeträgermedium durchströmt zunächst die in der Registerstation 23 angeordnete Verteilungseinheit 24 und wird über das Dreiwegeventil 30 der Zuleitung 28 zugeführt und strömt von dort aus zu der Wärmepumpe 27. Nach der Übertragung der in dem Wärmeträgermedium gespeicherten Energie auf das in dem Warmwasserkessel 19 befindliche Wasser fließt das abgekühlte Wärmeträgermedium über die Abflussleitung 29 zurück zu der Registerstation 23 und der Verteilungseinheit 24. Vorzugsweise und in dem Ausführungsbeispiel nach Fig. 2 wird das Wärmeträgermedium durch die Verteilungseinheit 24 den Kreisläufen 25 zugewiesen, wobei das Wärmeträgermedium beim Durchströmen der Kreisläufe 25 die in dem Erdreich E gespeicherte Wärme aufnimmt und über die Zuleitung 28 erneut zur Wärmepumpe 27 transportiert wird.

Weiterhin ist in Fig. 2 dargestellt, dass das durch den Sonnenkollektor 17 erwärmbare Wärmeträgermedium der Erdwärmenutzungseinheit 20 zuführbar ist. Empfohlenermaßen und in dem Ausführungsbeispiel nach Fig. 2 wird in einem Regenerationsmodus das Wärmeträgermedium von dem Sonnenkollektor 17 zu der Erdwärmenutzungseinheit 20 gefördert, wenn die in dem Wärmeträgermedium gespeicherte Wärmemenge größer ist als die durch den Wärmetauscher 21 und/oder durch die Wärmepumpe 27 entnommenen Wärmemenge ist. Mit anderen Worten wird das Wärmeträgermedium von dem Sonnenkollektor 17 zu der Erdwärmenutzungseinheit 20 gefördert, wenn im Verhältnis zum Wärmebedarf überschüssige Wärme in dem Wärmeträgermedium gespeichert ist. Gemäß Fig. 2 wird das Wärmeträgermedium durch das Dreiwegeventil 30 in die Registerstation 23 und die Verteilungseinheit 24 gefördert und wird von der Verteilungseinheit 24 den Kreisläufen 25 zugeleitet. Im Ergebnis wird gemäß Fig. 2 die in dem Wärmeträgermedium gespeicherte Wärme auf das Erdreich E übertragen. Sobald für die Erwärmung von Wasser die in dem Wärmeträgermedium gespeicherte Wärme benötigt wird, wird von dem Regenerationsmodus in den Produktionsmodus umgeschaltet.

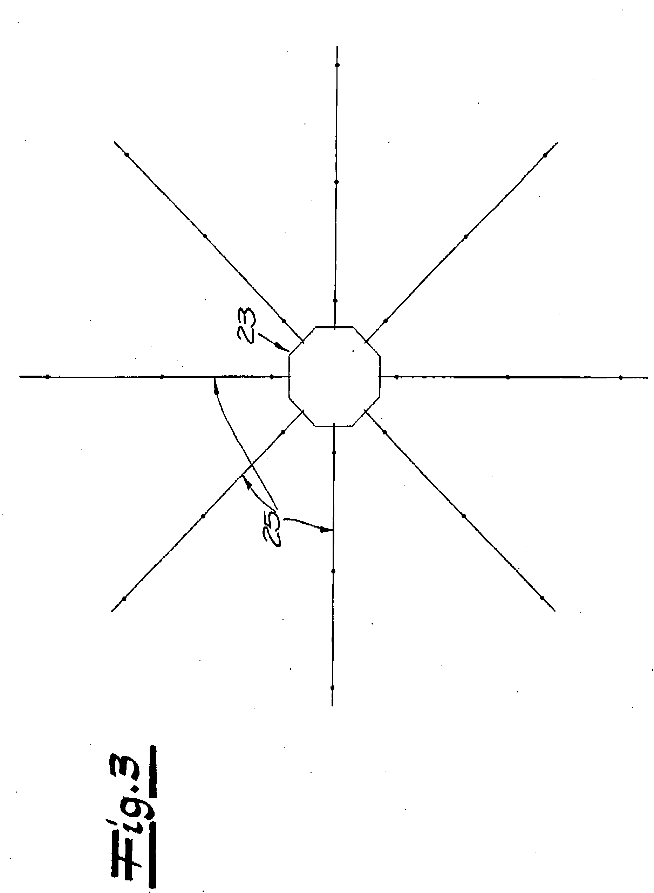

In Fig. 3 ist eine erfindungsgemäße Erdwärmenutzungseinheit dargestellt, die eine zentrale Registerstation 23 aufweist, an die gemäß Fig, 3 acht Registereinheiten bzw. Kreisläufe 25 angeschlossen sind. In der Registerstation 23 ist die in Fig. 3 nicht dargestellte Verteilungseinheit 24 angeordnet. Zweckmäßigerweise und in dem Ausführungsbeispiel nach Fig. 3 besteht ein Gehäuse der Registerstation 23 aus einem ebenfalls nicht dargestellten Kunststoffbehälter. Weiterhin ist in Fig. 3 dargestellt, dass die Registerstation 23 zentral bzw. mittig in den Registereinheiten bzw. Kreisläufen 25 angeordnet ist. Nach Fig. 3 sind die Kreisläufe 25 sternförmig um die Registerstation 23 angeordnet. Vorzugsweise und in dem Ausführungsbeispiel nach Fig. 3 weisen die Registereinheiten bzw. Kreisläufe 25 eine Länge von ungefähr 10 m auf. Länge meint im Rahmen der Erfindung die Ausdehnung der Registereinheiten bzw. Kreisläufe 25 parallel zur Erdoberfläche. Weiterhin ist in Fig, 3 dargestellt, dass die Registereinheiten bzw. Kreisläufe 25 in einer vertikal relativ zur Oberfläche orientierten Ebene angeordnet sind.

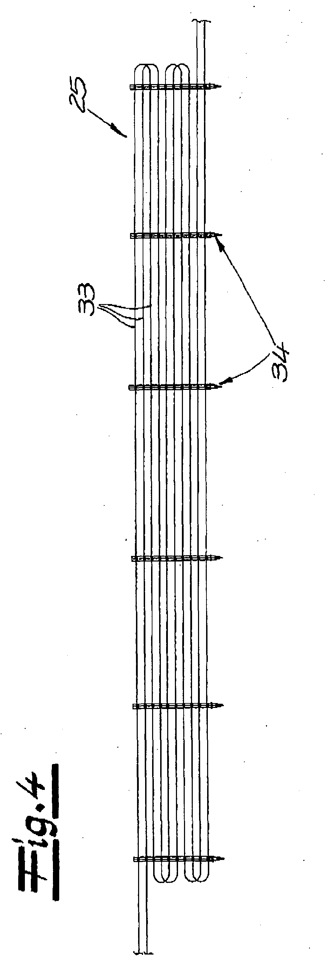

In Fig. 4 ist eine Seitenansicht einer Registereinheit bzw. eines Kreislaufs 25 dargestellt. Die Registereinheit bzw. der Kreislauf 25 wird durch Rohre 33 gebildet, die von dem Wärmeträgermedium durchströmt und von Ständerrohren 34 gehalten werden.

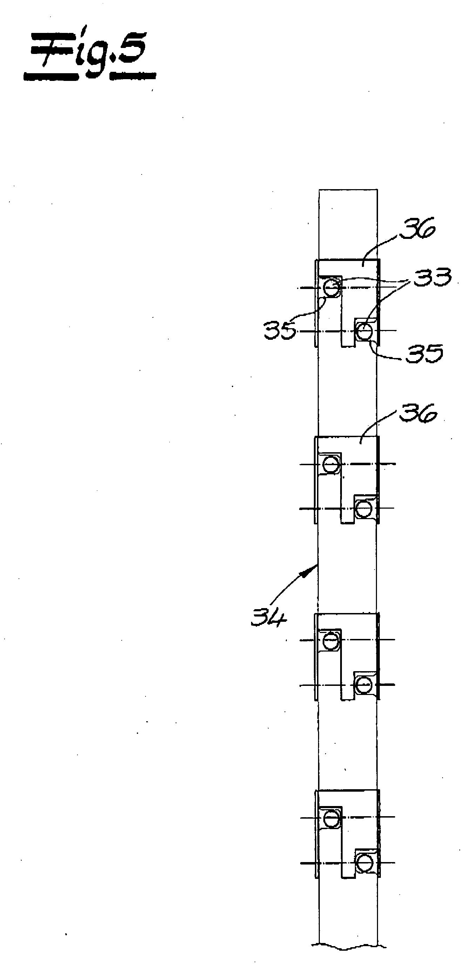

Fig. 5 zeigt einen Ausschnitt des Ständerrohrs 34, in dem Ausnehmungen bzw. Nuten 35 angeordnet sind, in denen die Rohre 33 platziert sind. Weiterhin ist in Fig. 5 dargestellt, dass die Rohre 33 durch Fixierhülsen 36 gegen ein Herausfallen aus den Nuten 35 der Ständerrohre 34 gesichert sind. Gemäß Fig. 4 werden die Rohre 33, aus denen eine Registereinheit bzw. ein Kreislauf 25 gebildet wird, durch eine Mehrzahl von Ständerrohren 34 gehalten.

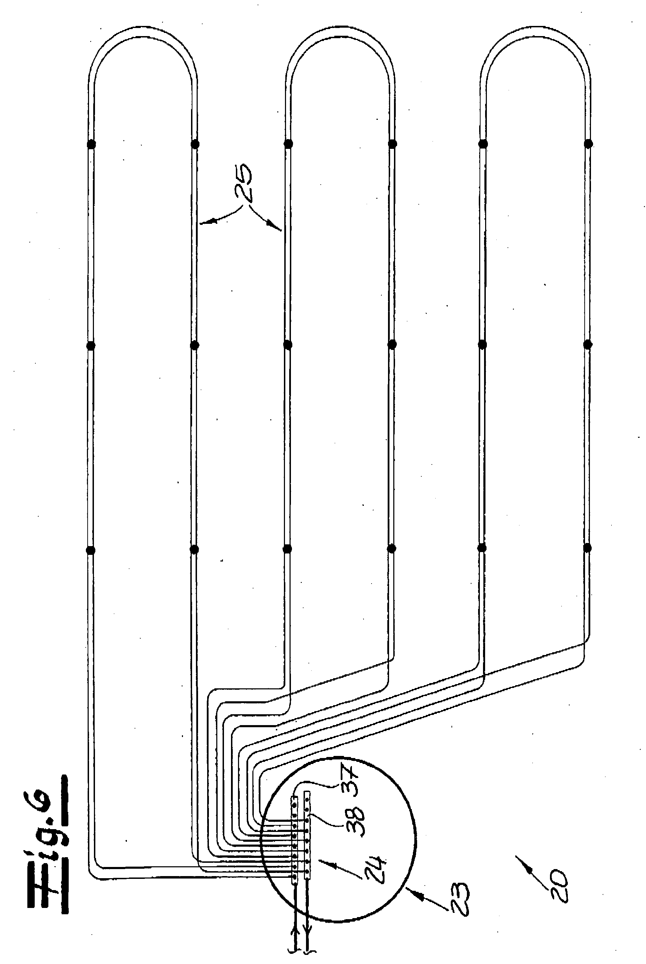

In Fig. 6 ist eine weitere Ausführungsform einer Erdwämenutzungseinheit 20 dargestellt, deren Registereinheiten bzw. Kreisläufe 25 U-förmig ausgestaltet sind, wobei die Schenkel der U-Profile parallel zueinander angeordnet sind. Insbesondere in den Fig. 2 und 6 ist dargestellt, dass den Registereinheiten bzw. Kreisläufen 25 durch eine Versorgungseinheit 37 der Verteilungseinheit 24 das Wärmeträgermedium zugeleitet wird. Weiterhin ist dargestellt, dass die Registereinheiten bzw. Kreisläufe 25 an eine Ableitungseinheit 38 der Verteilungseinheit 24 angeschlossen sind, durch welche Ableitungseinheit 38 das durch das Erdreich E erwärmte Wärmeträgermedium beispielsweise der Wärmepumpe 27 zuleitbar ist.

## Patentansprüche

1. Vorrichtung zur Erwärmung eines fluiden Mediums, vorzugsweise von Wasser, insbesondere zur Warmwasserbereitung, wobei die Vorrichtung (16) zumindest eine Sonnenenergienutzungseinheit (17), zumindest eine Erdwärmenutzungseinheit (20) und zumindest eine Wärmepumpe (27) aufweist, wobei die Erdwärmenutzungseinheit (20) in einer Tiefe von 0,5 m bis 5 m im Erdreich (7) angeordnet ist,
wobei das Wasser von der Sonnenenergienutzungseinheit (17) und/oder von der Wärmepumpe (27) erwärmbar ist, welche Wärmepumpe (27) quellseitig mit der Sonnenenergienutzungseinheit (17) und/oder der Erdwärmenutzungseinheit (20) verbunden ist
und wobei von der Sonnenenergienutzungseinheit (17) gewonnene Wärme in die Erdwärmenutzungseinheit (20) mit der Maßgabe einbringbar bzw. förderbar ist, dass die in die Erdwärmenutzungseinheit (20) geförderte Wärme die aus der Erdwärmenutzungseinheit (20) durch die Wärmepumpe (27) entnommene Wärme zumindest teilweise ersetzt bzw. regeneriert.

2. Vorrichtung nach Anspruch 1, wobei die Erdwärmenutzungseinheit (20) zumindest eine Verteilungseinheit (24), vorzugsweise außerhalb eines Hauses aufweist, an die mindestens eine Registereinheit und vorzugsweise eine Mehrzahl von Registereinheiten angeschlossen sind.

3. Vorrichtung nach einem der Ansprüche 1 oder 2, wobei die Erdwärmenutzungseinheit (20) als Registerstation (23) ausgebildet ist, die einen Behälter, die Verteilungseinheit (24) und die Registereinheit aufweist.

4. Vorrichtung nach einem der Ansprüche 2 oder 3, wobei die Registereinheit mit der sich in dem Behälter der Registerstation (23) befindlichen Verteilungseinheit (24) verbunden ist.

5. Vorrichtung nach einem der Ansprüche 3 oder 4, wobei die Verteilungseinheit (24) mit der Maßgabe steuerbar ist, dass das Wärmeträgermedium zumindest einer Registereinheit zuleitbar ist.

6. Vorrichtung nach einem der Ansprüche 3 bis 5, wobei die Registerstation (23) zumindest größtenteils aus zumindest einem Kunststoff gefertigt ist.

7. Vorrichtung nach einem der Ansprüche 3 bis 6, wobei der Behälter der Registerstation (23) als Speicher für das durch die Sonnenenergienutzungseinheit (17) erwärmte Wärmeträgermedium dient.

8. Vorrichtung nach einem der Ansprüche 2 bis 7, wobei eine Registereinheit in einer Ebene bzw. im Wesentlichen in einer Ebene angeordnet ist.

9. Vorrichtung nach Anspruch 8, wobei die Ebene horizontal bzw. im Wesentlichen horizontal orientiert ist.

10. Vorrichtung nach Anspruch 8, wobei die Ebene vertikal bzw. im Wesentlichen vertikal orientiert ist.

11. Vorrichtung nach einem der Ansprüche 2 bis 10, wobei eine Registereinheit zumindest einen Wärmeaustauschkreislauf aufweist, und wobei der Wärmeaustauschkreislauf von zumindest einem Rohr (33) gebildet wird.

12. Vorrichtung nach Anspruch 11, wobei das Rohr (33) im Erdreich (7) von zumindest einem Halteelement gehalten wird.

13. Vorrichtung nach Anspruch 12, wobei das Rohr (33) durch zumindest ein Fixierungselement an dem Halteelement fixiert ist.

14. Vorrichtung zur Erwärmung eines fluiden Mediums, vorzugsweise von Wasser, insbesondere zur Warmwasserbereitung, wobei die Vorrichtung (16) zumindest eine Erdwärmenutzungseinheit (20) und zumindest eine Wärmepumpe (27) aufweist, wobei die Erdwärmenutzungseinheit (20) in einer Tiefe von 0,5 bis 5 m im Erdreich (7) angeordnet ist,
wobei das Wasser von der Wärmepumpe (27) erwärmbar ist, welche Wärmepumpe (27) quellseitig mit der Erdwärmenutzungseinheit (20) verbunden ist
und wobei aus der Erdwärmenutzungseinheit (20) Wärme zu der Wärmepumpe (27) förderbar ist.

## Geänderte Patentansprüche

### Geänderte Patentansprüche gemäss Regel 137(2) EPÜ.

**1.** Vorrichtung zur Erwärmung eines fluiden Mediums, vorzugsweise von Wasser, insbesondere zur Warmwasserbereitung, wobei die Vorrichtung (16) zumindest eine Sonnenenergienutzungseinheit (17), zumindest eine Erdwärmenutzungseinheit (20) und zumindest eine Wärmepumpe (27) aufweist, wobei die Erdwärmenutzungseinheit (20) in einer Tiefe von 0,5 bis 5 m im Erdreich (7) angeordnet ist,
wobei das Wasser von der Sonnenenergienutzungseinheit (17) und/oder von der Wärmepumpe (27) erwärmbar ist, welche Wärmepumpe (27) quellseitig mit der Sonnenenergienutzungseinheit (17) und/oder der Erdwärmenutzungseinheit (20) verbunden ist,
wobei bei ausreichender Sonneneinstrahlung die Erwärmung des Wassers allein durch die in der Sonnenenergienutzungseinheit (17) gewonnene und auf das Wärmeträgermedium übertragene Wärme erfolgt,
wobei alternativ das Wärmeträgermedium - ohne Zwischenschaltung der Erdwärmenutzungseinheit (20) - von der Sonnenenergienutzungseinheit (17) zur Wärmepumpe (27) geleitet wird,
- wenn die durch die Sonnenenergienutzungseinheit (17) auf das Wärmeträgermedium übertragene Wärme nicht ausreicht, um das Wasser auf eine vorgegebene Temperatur zu erwärmen
- und solange die Temperatur des von der Sonnenenergienutzungseinheit (17) zur Wärmepumpe (27) geleiteten Wärmeträgermediums höher oder gleich der Temperatur des Wärmeträgermediums ist, das von der Erdwärmenutzungseinheit (20) zur Wärmepumpe (27) förderbar ist,
wobei fernerhin alternativ das Wärmeträgermedium von der Erdwärmenutzungseinheit (20) zu der Wärmepumpe (27) förderbar ist, wenn die Temperatur des durch die Sonnenenergienutzungseinheit (17) geförderten Wärmeträgermediums kleiner ist als die Temperatur des durch die Erdwärmenutzungseinheit (20) strömenden Wärmeträgermediums
und wobei von der Sonnenenergienutzungseinheit (17) gewonnene Wärme in die Erdwärmenutzungseinheit (20) mit der Maßgabe einbringbar bzw. förderbar ist, dass die in die Erdwärmenutzungseinheit (20) geförderte Wärme die aus der Erdwärmenutzungseinheit (20) durch die Wärmepumpe (27) entnommene Wärme zumindest teilweise ersetzt bzw. regeneriert.
